# EUROPEAN PATENT SPECIFICATION

(11) **EP 3 809 752 B1**
(45) Date of publication and mention of the grant of the patent: **08.11.2023**
(21) Application number: 19842159.6
(22) Date of filing: 19.07.2019
(51) Int. Cl.: H04W 74/08, H04L 1/1867

(54) **ELECTRONIC DEVICE, WIRELESS COMMUNICATION METHOD AND COMPUTER READABLE MEDIUM**
ELEKTRONISCHE VORRICHTUNG, DRAHTLOSKOMMUNIKATIONSVERFAHREN UND COMPUTERLESBARES MEDIUM
DISPOSITIF ÉLECTRONIQUE, PROCÉDÉ DE COMMUNICATION SANS FIL ET SUPPORT LISIBLE PAR ORDINATEUR

(30) Priority: 27.07.2018 CN 201810841935
(43) Date of publication of application: 21.04.2021
(73) Proprietor: Sony Group Corporation, Tokyo 108-0075 (JP)
(72) Inventor: CUI, Tao, Beijing 100028 (CN)
(74) Representative: D Young & Co LLP
(86) International application number: PCT/CN2019/096627
(87) International publication number: WO 2020/020049

(56) References cited:
- CN-A- 104 486 013
- CN-A- 106 686 738
- CN-A- 107 027 123
- US-A1- 2018 020 437
- SAMSUNG: "Channel access procedures for NR-U", 3GPP DRAFT; R1-1806761 - CHANNEL ACCESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20180521 - 20180525 20 May 2018 (2018-05-20), XP051441963, Retrieved from the Internet: URL:http://www.3gpp.org/ftp/Meetings%5F3GP P%5FSYNC/RAN1/Docs/ [retrieved on 2018-05-20]
- SEQUANS COMMUNICATIONS: "On multiplexing of URLLC and eMBB in DL", 3GPP DRAFT; R1-1708954, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 14 May 2017 (2017-05-14), XP051274126, Retrieved from the Internet: URL:http://www.3gpp.org/ftp/Meetings_3GPP_ SYNC/RAN1/Docs/ [retrieved on 2017-05-14]
- SONY: "Considerations on channel access for NR unlicensed operations", 3GPP DRAFT; R1-1806569 CHANNEL ACCESS FOR NR UNLICENSED OPERATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG1, no. Busan, Korea; 20180521 - 20180525 20 May 2018 (2018-05-20), XP051441771, Retrieved from the Internet: URL:http://www.3gpp.org/ftp/Meetings%5F3GP P%5FSYNC/RAN1/Docs/ [retrieved on 2018-05-20]
- HUAWEI ET AL: "Numerology and wideband operation in NR unlicensed", 3GPP DRAFT; R1-1803677, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sanya, China; 20180416 - 20180420 15 April 2018 (2018-04-15), XP051425974, Retrieved from the Internet: URL:http://www.3gpp.org/ftp/Meetings%5F3GP P%5FSYNC/RAN1/Docs/ [retrieved on 2018-04-15]
- SONY: "High Level Views on NR-U BWP", 3GPP DRAFT; R1-1720475, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, US; 20171127 - 20171202 18 November 2017 (2017-11-18), XP051370027, Retrieved from the Internet: URL:http://www.3gpp.org/ftp/tsg%5Fran/WG1% 5FRL1/TSGR1%5F91/Docs/ [retrieved on 2017-11-18]

## Description

### FIELD

The present disclosure generally relates to the field of wireless communications, and in particular to an electronic device, a wireless communication method, and a computer readable medium for performing data transmission with an unlicensed frequency band.

### BACKGROUND

In the new radio (NR), the use of an unlicensed frequency band is similar to that of a licensed frequency band. The maximum bandwidth supported by a single carrier is 100MHz in a frequency band lower than 7GHz, and the maximum bandwidth supported by a single carrier is 400MHz in a frequency band higher than 7GHz. How to effectively perform channel idle detection and perform data transmission on an unlicensed frequency band having such a large bandwidth is an urgent problem to be solved. Background references include:
- SAMSUNG, "Channel access procedures for NR-U", vol. RAN WG1, no. Busan, Korea; 20180521 - 20180525, (20180520), 3GPP DRAFT; R1-1806761 - CHANNEL ACCESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings%5F3GPP%5FSYNC/RAN1/Docs/
- SEQUANS COMMUNICATIONS, "On multiplexing of URLLC and eMBB in DL", vol. RAN WG1, no. Hangzhou, China; 20170515 - 20170519, (20170514), 3GPP DRAFT; R1-1708954, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN1/Docs/
- SONY, "Considerations on channel access for NR unlicensed operations", vol. RAN WG1, no. Busan, Korea; 20180521 - 20180525, (20180520), 3GPP DRAFT; R1-1806569 CHANNEL ACCESS FOR NR UNLICENSED OPERATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA, URL: http://www.3gpp.org/ftp/Meetings%5F3GPP%5FSYNC/RAN1/Docs/
- HUAWEI ET AL, "Numerology and wideband operation in NR unlicensed", vol. RAN WG1, no. Sanya, China; 20180416 - 20180420, (20180415), 3GPP DRAFT; R1-1803677, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings%5F3GPP%5FSYNC/RAN1/Docs/
- SONY, "High Level Views on NR-U BWP", vol. RAN WG1, no. Reno, US; 20171127 - 20171202, (20171118), 3GPP DRAFT; R1-1720475, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg%5Fran/WG1%5FRL1/TSGR1%5F91/Docs/

### SUMMARY

The invention is defined by the claims. According to the embodiments of the present disclosure, the allocated unlicensed frequency band can be more effectively used to perform data transmission.

### BRIEF DESCRIPTION OF THE DRAWINGS

The present disclosure can be understood better with reference to the description given in conjunction with the drawings hereinafter. The same or similar element is indicated by the same or similar reference numeral throughout the drawings. The drawings are included in the specification together with the following detailed description and form a part of the specification, and are used to further illustrate preferred embodiments of the present disclosure and explain principles and advantages of the present disclosure by examples. In the drawings:
Figure 1 is a block diagram showing a configuration example of an electronic device for wireless communication;
Figure 2 is a schematic diagram illustrating an example manner of a channel access detection scheme;
Figure 3 is a block diagram showing a configuration example of an electronic device for wireless communication according to the claimed embodiment;
Figure 4 is a schematic diagram illustrating another example manner of the channel access detection scheme;
Figure 5 is a block diagram showing a configuration example of an electronic device for wireless communication;
Figure 6 is a schematic diagram illustrating an example manner of embedding, in data that is successfully transmitted, information for indicating data that is not successfully transmitted;
Figure 7 is a schematic diagram illustrating an example manner of embedding, in data that is successfully transmitted, information related to retransmission of data that is not successfully transmitted;
Figure 8 is a schematic diagram illustrating an example manner of transmitting data that is not successfully transmitted by using resources selected from pre-configured unscheduled resources;
Figure 9 is a flowchart showing a process example of a wireless communication method;
Figure 10 is a flowchart showing a process example of a wireless communication method;
Figure 11 is a flowchart showing a process example of a wireless communication method;
Figure 12 is a block diagram showing an exemplary structure of a computer for implementing the method and the device provided in the present disclosure;
Figure 13 is a block diagram showing an example of a schematic configuration of a smart phone to which the technology of the present disclosure may be applied; and
Figure 14 is a block diagram showing an example of a schematic configuration of a gNB (base station in a 5G system) to which the technology of the present disclosure may be applied.

### DETAILED DESCRIPTION

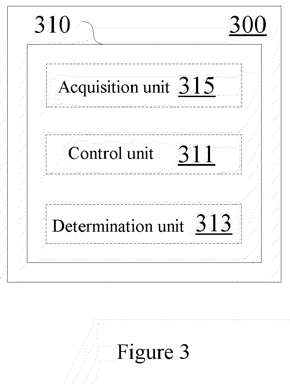

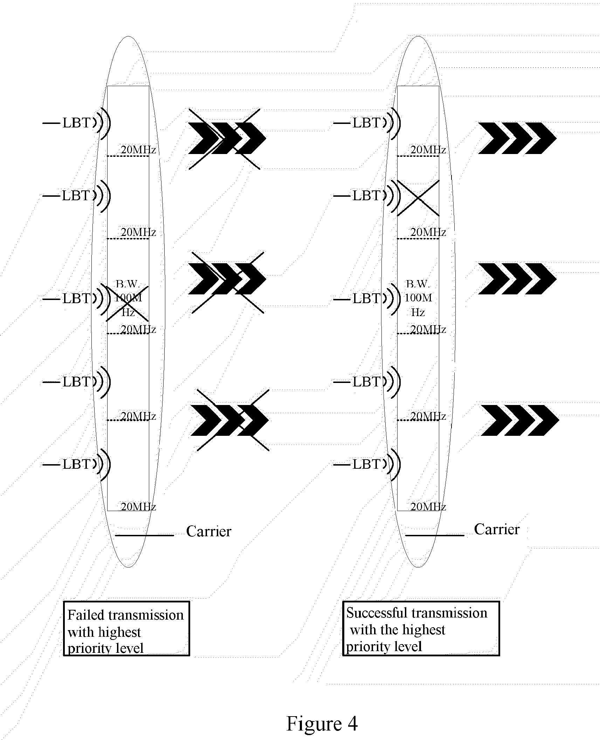

Hereinafter, the embodiments of the present disclosure are described with reference to the drawings. Elements and features described in one drawing or one embodiment of the present disclosure may be combined with elements and features described in one or more other drawings or embodiments. It should be noted that, indication and description for components and processing which are not related to the present disclosure or well known for those skilled in the art are omitted in the drawings and the description for the sake of clarity. Only the embodiments described with regard to figures 3 and 4 pertain to the claimed solution.

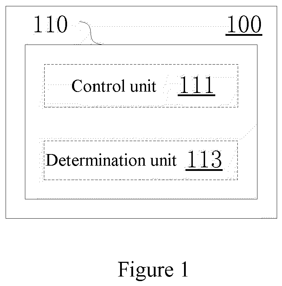

As shown in Figure 1, an electronic device 100 for wireless communication according to an embodiment includes processing circuitry 110. The processing circuitry 110 may be implemented by, for example, a specific chip, a chipset or a central processing unit (CPU) or the like.

The processing circuitry 110 includes a control unit 111 and a determination unit 113. It should be noted that, although the control unit 111 and the determination unit 113 are shown as functional blocks in Figure 1, it should be understood that functions of the units may be implemented by the processing circuitry as a whole and are not necessarily implemented by discrete actual components in the processing circuitry. In addition, although the processing circuitry is shown by one block in Figure 1, the electronic device may include multiple processing circuitries. The functions of the units may be distributed to the multiple processing circuitries, and are performed by the multiple processing circuitries in coordination with each other.

The control unit 111 is configured to perform control to perform, with respect to one or more bandwidth blocks of an allocated unlicensed frequency band, channel idle detection with a predetermined bandwidth.

Performing the channel idle detection may include performing the channel idle detection with respect to multiple sub-bandwidth blocks of the bandwidth block which have the predetermined bandwidth, respectively. The predetermined bandwidth may be a minimum unit for the channel idle detection, for example, may be 20MHz. The present disclosure is not limited thereto. The bandwidth block may be divided into sub-bandwidth blocks with different predetermined bandwidths as required.

The channel idle detection is briefly described below. Before a communication device (which may be a user equipment or a base station) accesses an unlicensed channel, a process of Listen before talk (LBT) is generally required, requiring at least Clear Channel Assessment (CCA) detection, i.e., energy detection. If it is detected that energy of the unlicensed frequency band exceeds a threshold, it is indicated that the unlicensed channel is occupied. There are four types of LBT: CAT1 LBT, in which the LBT is not performed; CAT2 LBT, in which the LBT is performed and random backoff is not performed; CAT3 LBT, in which the LBT is performed and a size of a backoff competition window is fixed; and CAT4 LBT, in which the LBT is performed and the size of the backoff competition window is variable. In addition, there are two types of unlicensed channel access. In a first type (Tyepe1), the CAT4 LBT is used, and a parameter of the LBT is configured according to a channel access priority class. In a second type (Tyepe2), the LBT is performed for 25us.

According to an embodiment, the control unit 111 may be configured to perform control to, perform channel idle detection of a first type with respect to one or more sub-bandwidth blocks among the multiple sub-bandwidth blocks, and perform channel idle detection of a second type with respect to remaining sub-bandwidth blocks.

For example, the channel idle detection of the first type may correspond to the CAT4 LBT, and the channel idle detection of the second type may correspond to the CAT2 LBT.

More specifically, after the bandwidth block allocated by the system is evenly divided into several sub-bandwidth blocks, for example, of 20MHz, the sub-bandwidth blocks of 20MHz may be equal to each other. That is, in a case where the communication device performs the channel idle detection with a configured bandwidth greater than 20MHz, for example, the CAT4 LBT may be performed with respect to each of the bandwidth blocks of 20MHz to ensure fairness of the channel. Alternatively, the CAT4 LBT is performed with respect to one of the bandwidth blocks of 20MHz, and the CAT2 LBT is performed with respect to the remaining bandwidth blocks of 20MHz.

In addition, according to the capability of the communication device, the channel idle detection may be performed with respect to the sub-bandwidth blocks of 20MHz, simultaneously or in sequence. Accordingly, according to an embodiment, the control unit 111 may be configured to perform control to, perform the channel idle detection simultaneously with respect to the multiple sub-bandwidth blocks or perform the channel idle detection successively with respect to the multiple sub-bandwidth blocks.

More specifically, in a case where the channel idle detection is performed in sequence, for example, the channel idle detection may be firstly performed with respect to one of the sub-bandwidth blocks of 20MHz which is randomly selected by the communication device, and then is performed in sequence with respect to the remaining sub-bandwidth blocks of 20MHz.

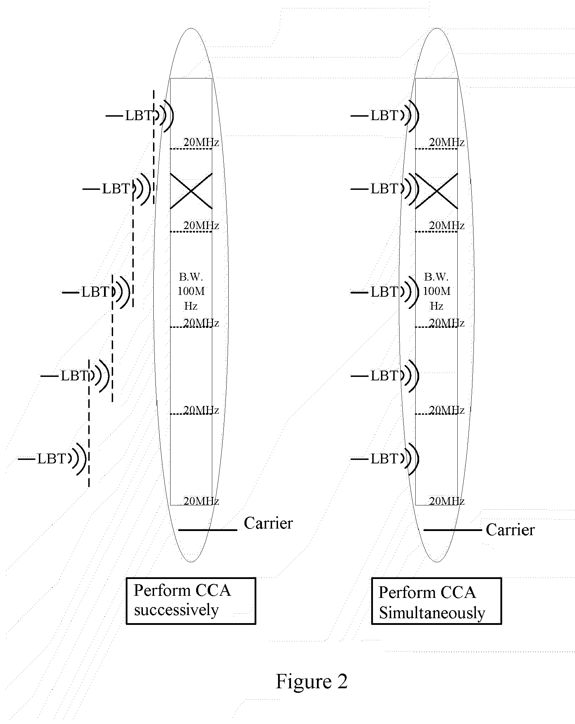

As shown in a left portion of Figure 2, dotted lines indicate that only after the channel idle detection with respect to one sub-bandwidth block of 20MHz is completed, the channel idle detection with respect to another sub-bandwidth block of 20MHz is performed. It should be noted that, in the case of performing the channel idle detection in sequence, the earlier detected sub-bandwidth block is required to wait for the later detected sub-bandwidth block. In addition, in a case where the communication device has a sufficient processing capacity, for example, in a case where the communication device is the base station, the channel idle detection may be performed simultaneously with respect to the multiple sub-bandwidth blocks of 20MHz, as shown in a right portion of Figure 2.

Referring to Figure 1 again, the determination unit 113 is configured to: based on a result of the channel idle detection performed with respect to the multiple sub-bandwidth blocks under control of the control unit 111, determine whether or not to use the corresponding bandwidth block to perform data transmission.

For example, the determination unit 113 may be configured to determine, based on a result of channel idle detection with respect to one or more sub-bandwidth blocks among the multiple sub-bandwidth blocks, whether or not to allow to use the bandwidth block of the allocated unlicensed frequency band. More specifically, the determining may include: allowing to use the corresponding bandwidth block in a case where the channel idle detection indicates that at least one of the multiple sub-bandwidth blocks is idle; not allowing to use the corresponding bandwidth block in a case where the channel idle detection indicates that at least one of the multiple sub-bandwidth blocks is non-idle; allowing to use the corresponding bandwidth block in a case where the channel idle detection indicates that a ratio of idle sub-bandwidth blocks in the multiple sub-bandwidth blocks exceeds a predetermined ratio; or not allowing to use the corresponding bandwidth block in a case where the channel idle detection indicates that a ratio of non-idle sub-bandwidth blocks in the multiple sub-bandwidth blocks exceeds a predetermined ratio.

The implementation of not allowing to use the corresponding bandwidth block in the case where at least one of the multiple sub-bandwidth blocks is non-idle or the ratio of non-idle sub-bandwidth blocks in the sub-bandwidth blocks exceeds a predetermined ratio is based on the following considerations. Due to strong correlation between data and occupied resources allocated for the data, if the result of the channel detection with respect to one or several bandwidths of 20MHz is being busy, a problem that an incomplete data packet cannot be correctly decoded may exist. In this case, the whole bandwidth block is abandoned to reduce complexity of a receiver design.

In addition, the implementation of allowing to use the corresponding bandwidth block in the case where at least one of the multiple sub-bandwidth blocks is idle or the ratio of idle sub-bandwidth blocks in the sub-bandwidth blocks exceeds a predetermined ratio is based on the following considerations. The transmission for data that cannot be successfully transmitted on a sub-bandwidth block may be retarded, and a part of the data may be transmitted by using a sub-bandwidth block passing the channel detection, to improve the spectrum utilization.

The determining may be performed based on one or more of the above conditions according to application scenarios and service requirements and the like.

The channel idle detection is performed with respect to the randomly selected sub-bandwidth block, reflecting fairness of the sub-bandwidth block allocation and reducing an extra signaling overhead. However, as previously described, an allocated bandwidth on a single carrier is closely related to the transmitted data block. Compared with the solution in which the channel idle detection is randomly simply performed with respect to the sub-bandwidth blocks, priority levels for the channel detection access may be specified for sub-bandwidth blocks in a large bandwidth, to better combine current states of the data and a portion of channels, and take the power consumption of the communication device used for performing the channel idle detection into account. In other words, it can be prescribed that, the result of the channel idle detection with respect to the sub-bandwidth block having a higher priority level has a greater impact on determining whether or not to utilize the whole allocated bandwidth.

Figure 3 shows a configuration example of an electronic device for wireless communication according to the claimed embodiment. As shown in Figure 3, an electronic device 300 according to the embodiment includes processing circuitry 310. In addition to a control unit 311 and a determination unit 313 which are similar to those in the above embodiment, the processing circuitry 310 further includes an acquisition unit 315.

The acquisition unit 315 is configured to acquire information related to priority levels of the multiple sub-bandwidth blocks. The priority levels are determined based on idle probabilities of corresponding sub-bandwidth blocks. Sub-bandwidth blocks of which the idle probabilities are higher have higher priority levels.

For example, the priority levels may be determined by the base station based on historical information of the corresponding sub-bandwidth blocks and are informed to the user equipment (for example, by high layer signaling).

The determination unit 313 is configured to: allow to use the corresponding bandwidth block in a case where the channel idle detection indicates that one or more sub-bandwidth blocks having higher priority levels among the multiple sub-bandwidth blocks are idle; or not allow to use the corresponding bandwidth block in a case where the channel idle detection indicates that one or more sub-bandwidth blocks having higher priority levels among the multiple sub-bandwidth blocks are non-idle.

In other words, if the result of the channel detection with respect to the sub-bandwidth blocks having higher priority levels is being busy and the result of the channel detection with respect to the sub-bandwidth blocks having lower priority levels is being idle, it can be determined that the allocated bandwidth block cannot be used. This is because that, the sub-bandwidth blocks having higher priority levels may carry system bits having important data. If the data cannot be transmitted correctly, the data may not be recovered even if retransmitted data is received at the receiving end.

As shown in Figure 4, it is assumed that, a carrier shown in the drawing has a bandwidth of 100MHz and is divided into five sub-bandwidth blocks of 20MHz, and a third sub-bandwidth block has the highest priority level. In the case shown in a left side of Figure 4, the channel idle detection indicates that the sub-bandwidth block having the highest priority level is non-idle, and it can be determined that the carrier is not available. In the case shown in a right side of Figure 4, the channel idle detection indicates that the sub-bandwidth block having the highest priority level is idle, and in this case, it can be determined that the carrier is available even if another sub-bandwidth block is detected as being non-idle.

By determining the priority levels of the sub-bandwidth blocks based on the historical information, a probability of the communication device accessing the channel can be increased.

In addition, different types of channel idle detection may be performed with respect to sub-bandwidth blocks having different priority levels.

Since idle probabilities of sub-bandwidth blocks having higher priority levels are higher, the channel idle detection of the second type (Type2, such as CAT2 LBT) may be performed with respect to one or more sub-bandwidth blocks having higher priority levels, and the channel idle detection of the first type (Type1, such as CAT4 LBT) is performed with respect to remaining sub-bandwidth blocks. In this way, the efficiency of the channel access can be improved.

The present disclosure is not limited to the above examples. For example, the CAT4 LBT may be performed with respect to the sub-bandwidth blocks having higher priority levels, and either the CAT4 LBT or the CAT2 LBT may be performed with respect to the remaining sub-bandwidth blocks. Performing the CAT4 LBT with respect to the sub-bandwidth blocks having higher priority levels can ensure the fairness of channel occupancy, and the type of the channel detection with respect to other sub-bandwidth blocks may be similar to that of multi-carrier channel detection for licensed assisted access (LAA).

For characteristics of the NR unlicensed frequency band, a solution of the channel idle detection in a case where the allocated bandwidth is, for example, greater than 20MHz is provided according to an embodiment of the present disclosure. As described above, the embodiment may be implemented at the base station side or at the user equipment side. More specifically, at the base station side, it can be determined according to the channel idle detection whether or not to use the allocated unlicensed frequency band to perform downlink data transmission. At the user equipment side, it can be determined according to the channel idle detection whether or not to use the allocated unlicensed frequency band to perform uplink data transmission.

Next, exemplary implementations are respectively described for the downlink data transmission and the uplink data transmission.

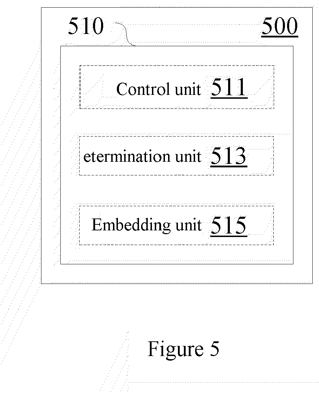

Figure 5 shows a configuration example of an electronic device for wireless communication according to an embodiment. The electronic device according to the embodiment may be implemented, for example, at the base station side, and is used to determine, based on a result of channel idle detection with respect to multiple sub-bandwidth blocks, whether or not to use an allocated unlicensed frequency band to perform downlink data transmission.

As shown in Figure 5, an electronic device 500 according to the embodiment includes processing circuitry 510. The processing circuitry 510 includes a control unit 511, a determination unit 513, and an embedding unit 515.

The control unit 511 is configured to: perform control to perform, with respect to one or more bandwidth blocks of an allocated unlicensed frequency band, channel idle detection with a predetermined bandwidth. A specific configuration of the control unit 511 is similar to that in the above embodiment, and is not repeated herein.

The determination unit 513 is configured to: allow to use the bandwidth block to perform downlink data transmission, in a case where the channel idle detection indicates that at least one portion of the bandwidth block which has the predetermined bandwidth is idle.

The embedding unit 515 is configured to embed first information and second information in data that is successfully transmitted. The first information indicates data that is not successfully transmitted. The second information is related to retransmission of the data that is not successfully transmitted.

More specifically, the first information may include, for example, an index of a sub-bandwidth block by which data is not successfully transmitted; an index of a code block group (CBG) that is not successfully transmitted; or an index of a code block group that is successfully transmitted.

The second information may include, for example, resource configuration required for the retransmission of the data; or time-frequency resources indicating a position where new downlink control information (DCI) is located.

The resource configuration required for the retransmission of the data may include, for example, an extension of time domain resources of a sub-bandwidth block by which data is successfully transmitted; or time domain resources reconfigured for the sub-bandwidth block by which data is successfully transmitted.

The time-frequency resources indicating the position where the new downlink control information is located indicates, for example, a physical downlink control channel (PDCCH) on which sub-bandwidth block is detected. The detection for the PDCCH may be slot-based or non-slot based, which may be configured by radio resource control (RRC) signaling.

As described above, in the case where the result of the channel detection with respect to the whole bandwidth allocated by the system is that some of sub-bandwidth blocks of 20MHz are busy, if the current transmission of the whole bandwidth is abandoned, it may result in wasting of spectrum resources and wasting of power consumption for the channel detection of the device to a certain extent. In this case, the embodiment aims to how to use resources of the sub-bandwidth blocks passing the channel idle detection to perform transmission, and newly add a control signaling format or field to indicate a flag of an opportunity that the data that is not transmitted due to the busy channel is to be transmitted in future and resources therefor.

For the NR control signaling design, two pieces of information are required to assist in indicating the data that is not transmitted successfully. One piece of information may include, for example, an index of a sub-bandwidth block by which the data is not successfully transmitted/an index of a CBG that is not successfully transmitted/ an index of a CBG that is successfully transmitted. The other piece of information may include, for example, the resource configuration required for the retransmission of the data/ time-frequency resources indicating a position where new DCI may be located.

The concept of the CBG is briefly described below. The concept of a code block (CB) exists in long term evolution (LTE). A transmission block (TB) is divided into multiple code blocks in coding. After being added with a cyclic redundancy check (CRC) code, the code blocks are combined into the original TB block by channel coding and rate matching, to be transmitted. A hybrid automatic repeat request (HARQ) only supports retransmission of the TB block. That is, as long as it is founded in decoding that a CRC check result of any one CB is not zero, i.e., negative acknowledge (NACK) is fed back, the base station retransmits the TB (all the CBs). In the scenario of enhanced mobile broadband (eMBB) supported by the NR, one TB supported by a bandwidth of 100MHz includes 80 CBs. It is found by simulation that, a probability that more than half of the CBs are incorrect is very low. Therefore, the NR supporting the HARQ feedback with more than 1 bit in one TB can improve efficiency. The transmission of the CBG and a detection bandwidth of the LBT may be bound together. That is, one or several CBGs into which the TB is divided may be transmitted in the same bandwidth of 20MHz. Since corresponding control information on the sub-bandwidth block by which data cannot be successfully transmitted cannot be transmitted successfully, the information for indicating the data that cannot be successfully transmitted on the sub-bandwidth block is required to be indicated by control information on other sub-bandwidth blocks that have accessed the channel.

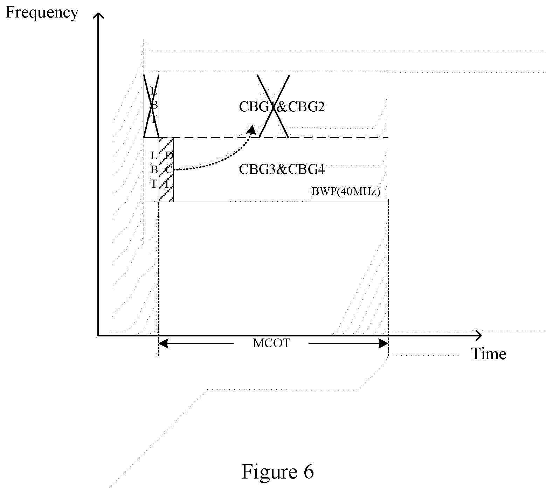

Reference is made to Figure 6, which shows an example of downlink transmission. Since a CBG1, a CBG2, a CBG3 and a CBG4 belong to the same allocated system bandwidth, DCI indicating transmission of the CBG3 and the CBG4 may contain an indication indicating that the CBG1 and the CBG2 cannot be transmitted. After receiving the CBG3/CBG4, the user equipment may temporarily cache the received data. The received data and missing data are merged and decoded after the missing data is successfully transmitted.

For the resource allocation required for trying to retransmit the data that is not successfully transmitted, the allocated resources may include frequency domain resources and time domain resources.

In the allocation of the frequency domain resources, considering the time required for radio frequency (RF) readjustment (at a frequency point of 6GHz, same frequency point switching in a band requires up to 20us, non-same frequency point switching in a band requires 50-200us, and inter-band switching requires up to 900us), the reallocated frequency domain resources may share or may not share a central frequency point with the original allocated bandwidth. In the latter case, the frequency domain resources whose channels may be busy are intentionally avoided, although a larger time-delay occurs than the case of sharing the central frequency point.

In the allocation of the time domain resources, it may be considered that a length of channel occupancy time (COT) occupied by the current transmission is used to determine whether or not to allocate new time domain resources for unsuccessfully transmitted resources in the following two manners.

In a first manner, the time domain resources currently allocated on the sub-bandwidth block of 20MHz passing the channel idle detection are extended (the total duration does not exceed 10ms).

In a second manner, reconfigured COT does not intersect the original COT.

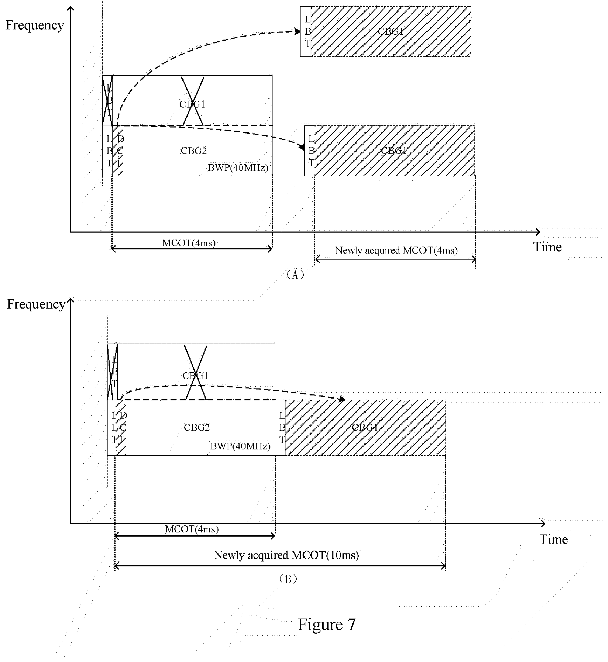

Next, the above two manners are described with reference to Figure 7.

As shown in (A) of Figure 7, in a case where the COT is reconfigured, the DCI may be used to inform the user equipment of LBT priority levels of channels to be accessed, and the priority levels may correspond to time domain maximum channel occupancy time (MCOT). Since new data is to be transmitted, the LBT of CAT4 may be enforced, and the size of the contention window may be adjusted according to the configuration. In order to increase the probability of successfully transmitting data by the device, control information transmitted on a part of the bandwidth passing the channel detection may indicate an opportunity of multiple transmissions (in the same frequency) in the frequency domain, and the receiving device may try to receive several bandwidths of 20MHz on which the data may be transmitted.

A manner of extending current time domain allocation resources is shown in (B) of Figure 7. By the manner, the step of performing the channel idle detection by the device can be avoided (if an interval between two transmissions is less than 16us) or the data can be transmitted using the CAT2 LBT, greatly reducing time-delay and excessive power consumption due to the channel detection. It should be noted that, the maximum time occupied by a channel on the unlicensed frequency band is 10ms. If the COT occupied by the current-transmitted data packet is more than half of the maximum time occupied by the channel, this manner is not applicable.

Next, a configuration example of an electronic device for wireless communication according to an embodiment is illustrated with reference to Figure 5 again. The electronic device according to the embodiment may be implemented, for example, at the user equipment side, and is used to determine, according to a result of channel idle detection with respect to multiple sub-bandwidth blocks, whether or not to use an allocated unlicensed frequency band to perform uplink data transmission.

As shown in Figure 5, an electronic device 500 according to the embodiment includes processing circuitry 510. The processing circuitry 510 includes a control unit 511, a determination unit 513, and an embedding unit 515.

The control unit 511 is configured to: perform control to perform, with respect to one or more bandwidth blocks of an allocated unlicensed frequency band, channel idle detection with a predetermined bandwidth.

The determination unit 513 is configured to: allow to use the bandwidth block to perform uplink data transmission, in a case where the channel idle detection indicates that at least one portion of the bandwidth block which has the predetermined bandwidth is idle.

The embedding unit 515 is configured to embed, in data that is successfully transmitted, information for indicating data that is not successfully transmitted.

The resource allocation manner described in the above embodiment is based on scheduling, which is mainly applicable to information addition in the DCI. For the uplink transmission of the user equipment, the content newly added in uplink control information (UCI) may be only the first information. Accordingly, the information indicating the data that is not successfully transmitted may include, for example, an index of a code block group that is not successfully transmitted; or an index of a code block group that is successfully transmitted.

In addition, in order to improve the transmission efficiency and reduce the transmission delay, for the uplink transmission of a large bandwidth, the user equipment may use unlicensed uplink transmission to transmit uplink data that is not successful transmitted.

Accordingly, according to an embodiment, the control unit 511 may further be configured to perform control to use resources selected from pre-configured unscheduled resources to transmit the data that is not successfully transmitted.

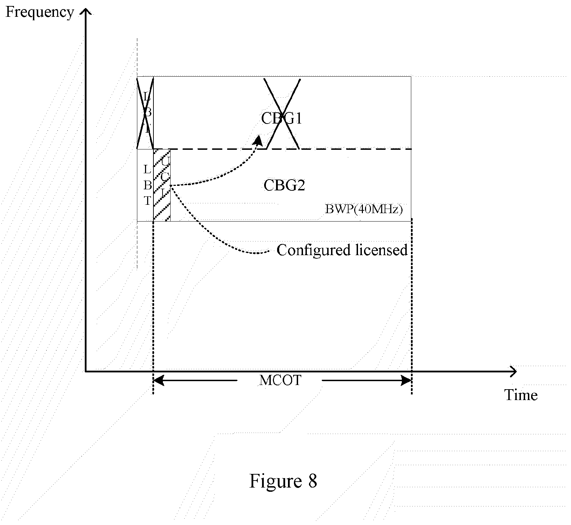

The resource allocation of the unlicensed transmission may be configured by high layer signaling in advance, or may be dynamically configured by the DCI. It should be noted that, configuring resources by a low layer on the unlicensed frequency band may increase the overhead of control signaling and the system delay caused by the failure of corresponding channel detection. In the case of configuring resources by the high layer signaling, an extended COT is difficult to be configured by the system, because the pre-configured unscheduled uplink resources are periodically semi-statical. That is, the position of the unscheduled uplink resources and the position of the scheduled uplink resources may be completely separated and unrelated, so that it is difficult to ensure that unscheduled uplink resources are available in a very short time period after the transmission of the scheduled uplink resources is completed. Therefore, according to the embodiment, the UCI of licensed uplink transmission may include an indication indicating uplink unscheduled transmission, as shown in Figure 8. The indication may not include the resource allocation, but is only a flag bit indicating that a part of the data that is not successfully transmitted supports the unscheduled transmission. In addition, the indication may further include HARQ ID, new data indication (NDI) and redundant version (RV).

By using the uplink unscheduled resources, the signaling overhead of reapplying resources can be reduced.

In the above description for the device according to the embodiment of the present disclosure, some processes and methods are disclosed. Next, a wireless communication method according to an embodiment of the present disclosure is described without repeating the details described above.

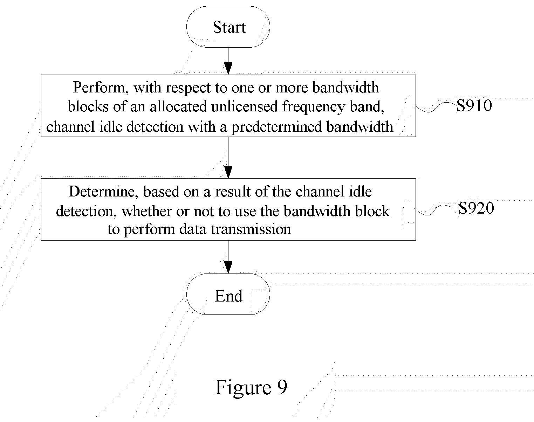

As shown in Figure 9, a wireless communication method according to an embodiment includes the following steps S910 and S920.

In S910, with respect to one or more bandwidth blocks of an allocated unlicensed frequency band, channel idle detection is performed with a predetermined bandwidth.

In S920, based on a result of the channel idle detection, it is determined whether or not to use the bandwidth block to perform data transmission.

Further, the wireless communication method according to the embodiment may further include the step of acquiring information related to priority levels of multiple sub-bandwidth blocks. The priority levels may be determined based on idle probabilities of corresponding sub-bandwidth blocks, and sub-bandwidth blocks of which the idle probabilities are higher have higher priority levels.

The above method may be implemented at the base station side or at the user equipment side, to respectively determine whether or not to use the unlicensed frequency band to perform downlink data transmission and uplink data transmission.

In addition, electronic devices respectively for determining whether or not to use the unlicensed frequency band to perform downlink data transmission and uplink data transmission are further provided according to an embodiment of the present disclosure. The electronic devices may be respectively implemented at the base station side and the user equipment side.

An electronic device for wireless communication according to an embodiment includes processing circuitry. The processing circuitry is configured to perform control to perform, with respect to one or more bandwidth blocks of an allocated unlicensed frequency band, channel idle detection with a predetermined bandwidth. The processing circuitry is further configured to: allow to use the bandwidth block to perform downlink data transmission, in a case where the channel idle detection indicates that at least one portion of the bandwidth block which has the predetermined bandwidth is idle. The processing circuitry is further configured to embed, in data that is successfully transmitted, first information for indicating data that is not successfully transmitted.

The first information may include one of the following: an index of a sub-bandwidth block by which data is not successfully transmitted; an index of a code block group that is not successfully transmitted; and an index of a code block group that is successfully transmitted.

The processing circuitry is further configured to embed, in the data that is successfully transmitted, second information related to retransmission of the data that is not successfully transmitted.

The second information may include: resource configuration required for the retransmission of the data; or time-frequency resources indicating a position where new downlink control information is located.

More specifically, the resource configuration required for the retransmission of the data may include: an extension of time domain resources of a sub-bandwidth block by which data is successfully transmitted; or time domain resources reconfigured for the sub-bandwidth block by which data is successfully transmitted.

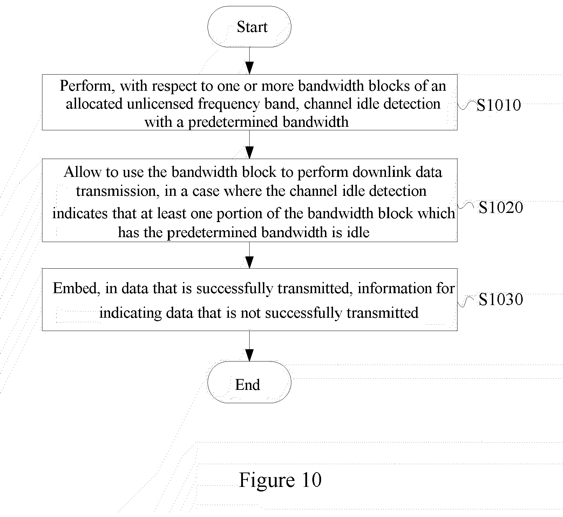

Figure 10 shows a process example of a corresponding wireless communication method. The method includes the following steps S1010 to S1030.

In S 1010, with respect to one or more bandwidth blocks of an allocated unlicensed frequency band, channel idle detection is performed with a predetermined bandwidth.

In S1020, in a case where the channel idle detection indicates that at least one portion of the bandwidth block which has the predetermined bandwidth is idle, it is allowed to use the bandwidth block to perform downlink data transmission.

In S1030, first information for indicating data that is not successfully transmitted is embedded in data that is successfully transmitted.

An electronic device for wireless communication according to another embodiment includes processing circuitry. The processing circuitry is configured to perform control to perform, with respect to one or more bandwidth blocks of an allocated unlicensed frequency band, channel idle detection with a predetermined bandwidth. The processing circuitry is further configured to: allow to use the bandwidth block to perform uplink data transmission, in a case where the channel idle detection indicates that at least one portion of the bandwidth block which has the predetermined bandwidth is idle. The processing circuitry is further configured to embed, in data that is successfully transmitted, information for indicating data that is not successfully transmitted.

The information indicating the data that is not successfully transmitted may include: an index of a code block group that is not successfully transmitted; or an index of a code block group that is successfully transmitted.

In addition, the processing circuitry may further be configured to perform control to use resources selected from pre-configured unscheduled resources to transmit the data that is not successfully transmitted.

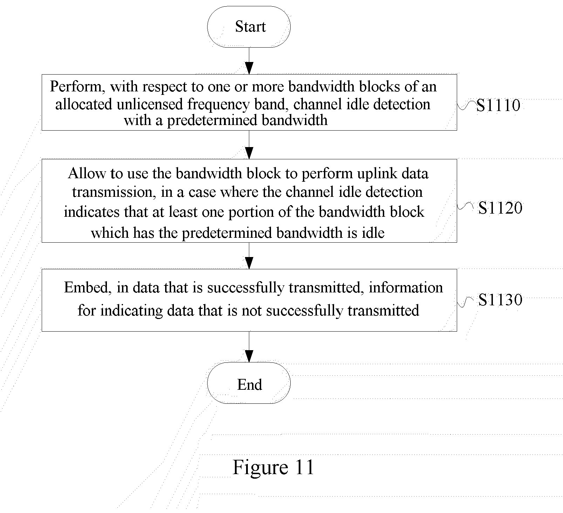

Reference is made to Figure 11, which shows a process example of a corresponding wireless communication method. The method includes the following steps S1110 to S1130.

In S1110, with respect to one or more bandwidth blocks of an allocated unlicensed frequency band, channel idle detection is performed with a predetermined bandwidth.

In S1120, in a case where the channel idle detection indicates that at least one portion of the bandwidth block which has the predetermined bandwidth is idle, it is allowed to use the bandwidth block to perform uplink data transmission.

In S1130, information for indicating data that is not successfully transmitted is embedded in data that is successfully transmitted.

In addition, a computer readable medium is further provided according an embodiment of the present disclosure. The computer readable medium includes an executable instruction. When executed by an information processing apparatus, the executable instruction causes the information processing apparatus to perform the method according to the above embodiments.

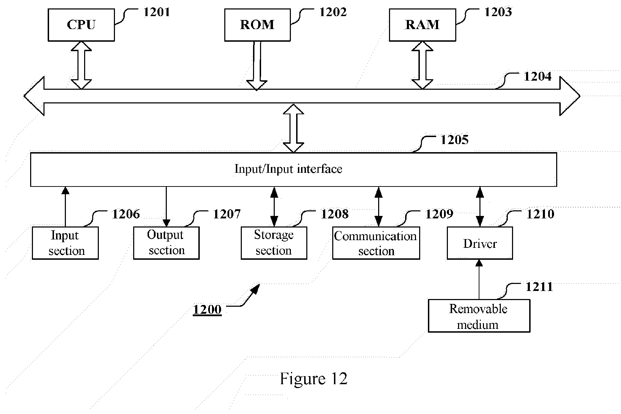

As an example, steps of the methods and modules and/or units of the devices may be implemented by software, firmware, hardware or a combination thereof. In a case of implementing by software or firmware, a program constituting the software for implementing the above methods may be installed from a storage medium or a network to a computer (for example, a general-purpose computer 1200 shown in Figure 12) having a dedicated hardware structure. The computer can perform various functions when being installed with various programs.

In Figure 12, an operation processing unit (i.e., CPU) 1201 performs various types of processing according to programs stored in a read only memory (ROM) 1202 or programs loaded from a storage section 1208 to a random access memory (RAM) 1203. Data required when the CPU 1201 performs various types of processing is stored in the RAM 1203 as needed. The CPU 1201, the ROM 1202 and the RAM 1203 are linked to each other via a bus 1204. An input/output interface 1205 is also linked to the bus 1204.

The following components are linked to the input/output interface 1205: an input section 1206 (including a keyboard, a mouse and so on), an output section 1207 (including a display such as a cathode ray tube (CRT) and a liquid crystal display (LCD), a speaker and so on), a storage section 1208 (including a hard disk and so on), and a communication section 1209 (including a network interface card such as a LAN card, a modem and so on). The communication section1209 performs communication processing via a network such as the Internet. A driver 1210 may also be linked to the input/output interface 1205 as needed. A removable medium 1211 such as a magnetic disk, an optical disk, a magnetic-optical disk and a semiconductor memory may be installed on the driver 1210 as needed, such that computer programs read from the removable medium 1211 are installed into the storage section1208 as needed.

In a case where the series of processing described above is implemented by software, programs constituting the software are installed from a network such as the Internet or a storage medium such as the removable medium 1211.

Those skilled in the art should understand that the storage medium is not limited to the removable medium 1211 shown in Figure 12 which stores programs and is distributed separately from the device to provide the programs to the user. Examples of the removable medium 1211 include: a magnetic disk (including a floppy disk (registered trademark), an optical disk (including a compact disk read only memory (CD-ROM) and a digital versatile disk (DVD)), a magnetic-optical disk (including a mini disk (MD) (registered trademark)), and a semiconductor memory. Alternatively, the storage medium may be the ROM 1202, a hard disk included in the storage section 1208 and so on. The programs are stored in the storage medium, and the storage medium is distributed to the user together with the device including the storage medium.

A program product storing machine readable instruction codes is further provided according to the embodiments of the present disclosure. When read and executed by a machine, the instruction codes cause the machine to perform the method according to the embodiments of the present disclosure.

Accordingly, a storage medium for carrying the above-described program product storing the machine readable instruction codes is further provided in the present disclosure. The storage medium includes, but is not limited to, a floppy disk, an optical disk, a magnetic-optical disk, a memory card, a memory stick and so on.

An electronic device is further provided according to the embodiments of the present disclosure. In a case where the electronic device is used for a base station side, the electronic device may be implemented as any type of gNB or evolution node B (eNB), such as a macro eNB and a small eNB. The small eNB may be an eNB covering a cell smaller than a macro cell, such as a pico eNB, a micro eNB and a home (femto) eNB. Alternatively, the electronic device may be implemented as any other type of base station, such as a NodeB and a base transceiver station (BTS). The electronic device may include: a main body (also referred to as a base station device) configured to control wireless communication; and one or more remote radio heads (RRH) arranged at positions different from the main body. In addition, various types of terminals described below may operate as a base station by performing functions of the base station temporarily or in a semi-permanent manner.

In a case where the electronic device is used for a user equipment side, the electronic device may be implemented as a mobile terminal (such as a smart phone, a tablet personal computer (PC), a notebook PC, a portable game terminal, a portable/dongle mobile router and a digital camera) or a vehicle terminal (such as an a car navigation device). In addition, the electronic device may be a wireless communication module (such as an integrated circuit module including a single wafer or multiple wafers) installed on each of the above terminals.

### [Application Example on Terminal Device]

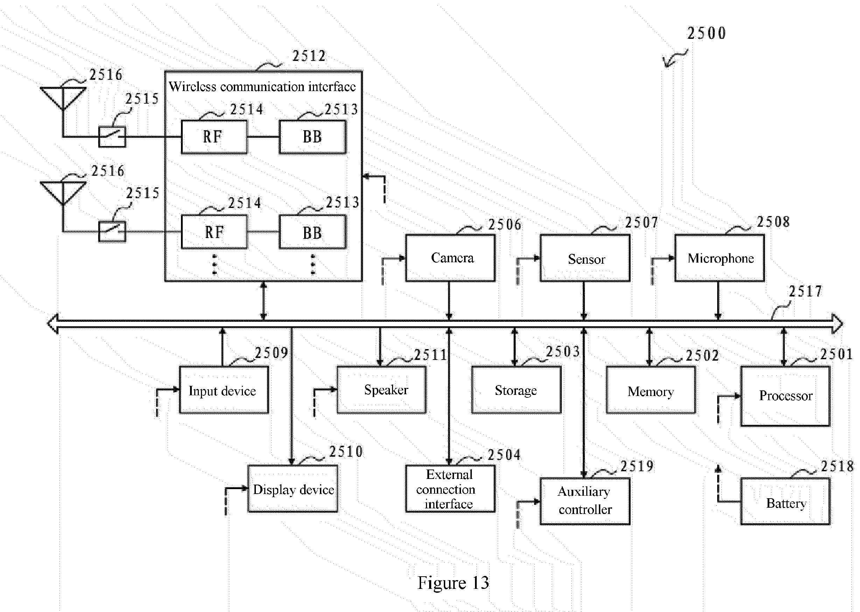

Figure 13 is a block diagram showing an example of a schematic configuration of a smart phone 2500 to which the technology of the present disclosure may be applied. The smart phone 2500 includes a processor 2501, a memory 2502, a storage 2503, an external connection interface 2504, a camera 2506, a sensor 2507, a microphone 2508, an input device 2509, a display device 2510, a speaker 2511, a wireless communication interface 2512, one or more antenna switches 2515, one or more antennas 2516, a bus 2517, a battery 2518, and an auxiliary controller 2519.

The processor 2501 may be, for example, a CPU or a system on a chip (SoC), and controls functions of an application layer and another layer of the smart phone 2500. The memory 2502 includes a RAM and a ROM, and stores a program that is executed by the processor 2501, and data. The storage 2503 may include a storage medium such as a semiconductor memory and a hard disk. The external connection interface 2504 is an interface for connecting an external device (such as a memory card and a universal serial bus (USB) device) to the smart phone 2500.

The camera 2506 includes an image sensor (such as a charge coupled device (CCD) and a complementary metal oxide semiconductor (CMOS)), and generates a captured image. The sensor 2507 may include a group of sensors such as a measurement sensor, a gyro sensor, a geomagnetic sensor, and an acceleration sensor. The microphone 2508 converts sounds that are inputted to the smart phone 2500 to audio signals. The input device 2509 includes, for example, a touch sensor configured to detect touch onto a screen of the display device 2510, a keypad, a keyboard, a button, or a switch, and receive an operation or information inputted from a user. The display device 2510 includes a screen (such as a liquid crystal display (LCD) and an organic light-emitting diode (OLED) display), and displays an output image of the smart phone 2500. The speaker 2511 converts audio signals that are outputted from the smart phone 2500 to sounds.

The wireless communication interface 2512 supports any cellular communication scheme (such as LTE and LTE-Advanced), and performs wireless communication. The wireless communication interface 2512 may typically include, for example, a base band (BB) processor 2513 and a radio frequency (RF) circuit 2514. The BB processor 2513 may perform, for example, encoding/decoding, modulating/demodulating, and multiplexing/demultiplexing, and performs various types of signal processing for wireless communication. Meanwhile, the RF circuit 2514 may include, for example, a mixer, a filter, and an amplifier, and transmits and receives wireless signals via the antenna 2516. The wireless communication interface 2512 may be a chip module having the BB processor 2513 and the RF circuit 2514 integrated thereon. As shown in Figure 13, the wireless communication interface 2512 may include multiple BB processors 2513 and multiple RF circuits 2514. Although Figure 13 shows the example in which the wireless communication interface 2512 includes the multiple BB processors 2513 and the multiple RF circuits 2514, the wireless communication interface 2512 may also include a single BB processor 2513 or a single RF circuit 2514.

Furthermore, in addition to a cellular communication scheme, the wireless communication interface 2512 may support another type of wireless communication scheme such as a short-distance wireless communication scheme, a near field communication scheme, and a wireless local area network (LAN) scheme. In this case, the wireless communication interface 2512 may include the BB processor 2513 and the RF circuit 2514 for each wireless communication scheme.

Each of the antenna switches 2515 switches connection destinations of the antennas 2516 among multiple circuits (such as circuits for different wireless communication schemes) included in the wireless communication interface 2512.

Each of the antennas 2516 includes a single antenna element or multiple antenna elements (such as multiple antenna elements included in an MIMO antenna), and is used for the wireless communication interface 2512 to transmit and receive wireless signals. As shown in Figure13, the smart phone 2500 may include multiple antennas 2516. Although Figure13 shows the example in which the smart phone 2500 includes the multiple antennas 2516, the smart phone 2500 may also include a single antenna 2516.

Furthermore, the smart phone 2500 may include the antenna 2516 for each wireless communication scheme. In this case, the antenna switches 2515 may be omitted from the configuration of the smart phone 2500.

The bus 2517 connects the processor 2501, the memory 2502, the storage 2503, the external connection interface 2504, the camera 2506, the sensor 2507, the microphone 2508, the input device 2509, the display device 2510, the speaker 2511, the wireless communication interface 2512, and the auxiliary controller 2519 to each other. The battery 2518 supplies power to blocks of the smart phone 2500 shown in Figure13 via feeder lines, which are partially shown as dashed lines in Figure 13. The auxiliary controller 2519 operates a minimum necessary function of the smart phone 2500, for example, in a sleep mode.

In the smart phone 2500 shown in Figure 13, the transceiving apparatus in the device at the user equipment side according to the embodiment of the present disclosure may be implemented by the wireless communication interface 2512. At least a part of functions of the processing circuitry and/or units in the electronic device or the information processing apparatus at the user equipment side according to the embodiment of the present disclosure may be implemented by the processor 2501 or the auxiliary controller 2519. For example, power consumption of the battery 2518 may be reduced by performing a part of the functions of the processor 2501 by the auxiliary controller 2519. In addition, the processor 2501 or the auxiliary controller 2519 may perform at least a part of the functions of the processing circuitry and/or units in the electronic device or the information processing apparatus at the user equipment side according to the embodiment of the present disclosure by executing programs stored in the memory 2502 or the storage 2503.

### [Application Example on Base Station]

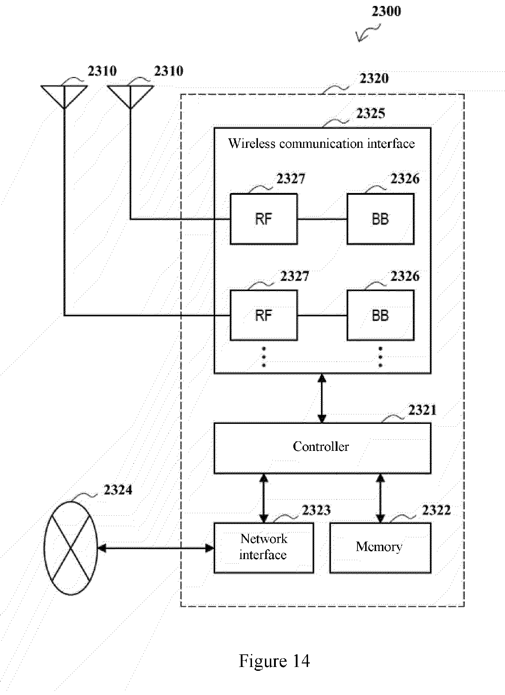

Figure 14 is a block diagram showing an example of a schematic configuration of a gNB to which the technology of the present disclosure may be applied. A gNB 2300 includes multiple antennas 2310 and a base station device 2320. The base station device 2320 and each antenna 2310 may be connected to each other via a radio frequency (RF) cable.

Each of the antennas 2310 includes a single antenna element or multiple antenna elements (such as multiple antenna elements included in a multiple-input multiple-output (MIMO) antenna), and is used for the base station device 2320 to transmit and receive wireless signals. As shown in Figure 14, the gNB 2300 may include multiple antennas 2310. For example, the multiple antennas 2310 may be compatible with multiple frequency bands used by the gNB 2300.

The base station device 2320 includes a controller 2321, a memory 2322, a network interface 2323, and a wireless communication interface 2325.

The controller 2321 may be, for example, a CPU or a DSP, and operates various functions of a higher layer of the base station device 2320. For example, the controller 2321 generates a data packet from data in signals processed by the wireless communication interface 2325, and transfers the generated packet via the network interface 2323. The controller 2321 may bundle data from multiple baseband processors to generate the bundled packet, and transfer the generated bundled packet. The controller 2321 may have logical functions of performing control such as radio resource control, radio bearer control, mobility management, admission control and scheduling. The control may be performed in corporation with an eNB or a core network node in the vicinity. The memory 2322 includes a RAM and a ROM, and stores programs executed by the controller 2321 and various types of control data (such as a terminal list, transmission power data, and scheduling data).

The network interface 2323 is a communication interface for connecting the base station device 2320 to a core network 2324. The controller 2321 may communicate with a core network node or another gNB via the network interface 2323. In this case, the gNB 2300 and the core network node or the other gNB may be connected to each other via a logical interface (such as an S1 interface and an X2 interface). The network interface 2323 may also be a wired communication interface or a wireless communication interface for a wireless backhaul line. If the network interface 2323 is a wireless communication interface, the network interface 2323 may use a higher frequency band for wireless communication than a frequency band used by the wireless communication interface 2325.

The wireless communication interface 2325 supports any cellular communication scheme (such as Long Term Evolution (LTE) and LTE-advanced), and provides wireless connection to a terminal located in a cell of the gNB 2300 via the antenna 2310. The wireless communication interface 2325 may generally include, for example, a BB processor 2326 and an RF circuit 2327. The BB processor 2326 may perform, for example, encoding/decoding, modulating/demodulating and multiplexing/demultiplexing, and performs various types of signal processing of layers (such as L1, medium access control (MAC), radio link control (RLC), and a packet data convergence protocol (PDCP)). Instead of the controller 2321, the BB processor 2326 may have a part or all of the above logical functions. The BB processor 2326 may be a memory storing a communication control program or a module including a processor and a related circuit configured to execute the program. Updating the program may allow the functions of the BB processor 2326 to be changed. The module may be a card or a blade that is inserted into a slot of the base station device 2320. Alternatively, the module may be a chip installed on the card or the blade. The RF circuit 2327 may include, for example, a mixer, a filter and an amplifier, and transmits and receives wireless signals via the antenna 2310.

As shown in Figure 14, the wireless communication interface 2325 may include multiple BB processors 2326. For example, the multiple BB processors 2326 may be compatible with multiple frequency bands used by the gNB 2300. As shown in Figure 14, the wireless communication interface 2325 may include multiple RF circuits 2327. For example, the multiple RF circuits 2327 may be compatible with multiple antenna elements. Although Figure14 shows the example in which the wireless communication interface 2325 includes the multiple BB processors 2326 and the multiple RF circuits 2327, the wireless communication interface 2325 may also include a single BB processor 2326 or a single RF circuit 2327.

In the eNB 2300 shown in Figure 14, the transceiving apparatus in the wireless communication device at the base station side may be implemented by the wireless communication interface 2325. At least a part of functions of the processing circuitry and/or units in the electronic device or the wireless communication device at the base station side may be implemented by the controller 2321. For example, the controller 2321 may perform at least a part of the functions of the processing circuitry and/or units in the electronic device or the wireless communication device at the base station side by executing programs stored in the memory 2322.

In the above description for specific embodiments of the present disclosure, features described and/or illustrated for one embodiment may be used in one or more other embodiments in the same or similar manner, may be combined with features in other embodiments, or may substitute features in other embodiments.

It should be noted that, terms "including/comprising" used herein refer to the presence of features, elements, steps or components, and do not exclude the presence or addition of one or more other features, elements, steps or components.

In the above embodiments and examples, reference numerals consisting of numbers are used to indicate various steps and/or units. Those skilled in the art should understand that the reference numerals are used to facilitate describing and drawing, and are not intended to indicate an order or a limitation in any way.

In addition, the method provided in the present disclosure is not limited to be performed in a time order described in the description, and may be performed according to other time orders, in parallel or independently. Therefore, the order in which the method described in the description is performed does not limit the technical scope of the present disclosure.

## Claims

1. An electronic device (300) for wireless communication, comprising processing circuitry (310) configured to:
perform control to perform, with respect to one or more bandwidth blocks of an allocated unlicensed frequency band, channel idle detection with a predetermined bandwidth; and
determine, based on a result of the channel idle detection, whether or not to use the bandwidth block to perform data transmission;
wherein performing channel idle detection comprises:
performing the channel idle detection with respect to a plurality of sub-bandwidth blocks of the bandwidth block which have the predetermined bandwidth, respectively;
wherein the processing circuitry is further configured to:
acquire information related to priority levels of the plurality of sub-bandwidth blocks,
wherein the priority levels are determined based on idle probabilities of corresponding sub-bandwidth blocks, and sub-bandwidth blocks of which the idle probabilities are higher have higher priority levels; and
wherein performing channel idle detection comprises:
performing channel idle detection of a second type with respect to one or more sub-bandwidth blocks having higher priority levels, and performing channel idle detection of a first type with respect to remaining sub-bandwidth blocks.

2. The electronic device according to claim 1, wherein the determining comprises:
allowing to use the bandwidth block in a case where the channel idle detection indicates that at least one of the plurality of sub-bandwidth blocks is idle;
not allowing to use the bandwidth block in a case where the channel idle detection indicates that at least one of the plurality of sub-bandwidth blocks is non-idle;
allowing to use the bandwidth block in a case where the channel idle detection indicates that a ratio of idle sub-bandwidth blocks in the plurality of sub-bandwidth blocks exceeds a predetermined ratio; or
not allowing to use the bandwidth block in a case where the channel idle detection indicates that a ratio of non-idle sub-bandwidth blocks in the plurality of sub-bandwidth blocks exceeds a predetermined ratio, or
wherein performing channel idle detection comprises:
performing channel idle detection simultaneously with respect to the plurality of sub-bandwidth blocks; or
performing channel idle detection successively with respect to the plurality of sub-bandwidth blocks.

3. The electronic device according to claim 1, wherein the priority levels are determined by a base station based on historical information of the corresponding sub-bandwidth blocks and are informed to a user equipment, or
wherein the determining comprises:
allowing to use the bandwidth block in a case where the channel idle detection indicates that one or more sub-bandwidth blocks having higher priority levels among the plurality of sub-bandwidth blocks are idle; or
not allowing to use the bandwidth block in a case where the channel idle detection indicates that one or more sub-bandwidth blocks having higher priority levels among the plurality of sub-bandwidth blocks are non-idle.

4. The electronic device according to claim 1, wherein
the determining comprises: allowing to use the bandwidth block to perform downlink data transmission, in a case where the channel idle detection indicates that at least one of the plurality of sub-bandwidth blocks is idle; and
the processing circuitry is further configured to: embed, in data that is successfully transmitted, first information for indicating data that is not successfully transmitted and second information related to retransmission of the data that is not successfully transmitted.

5. The electronic device according to claim 4, wherein the first information comprises one of:
an index of a sub-bandwidth block by which data is not successfully transmitted;
an index of a code block group that is not successfully transmitted; and
an index of a code block group that is successfully transmitted.

6. The electronic device according to claim 4, wherein the second information comprises:
resource configuration required for the retransmission of the data; or
time-frequency resources indicating a position where new downlink control information is located, and
wherein the resource configuration required for the retransmission of the data comprises:
an extension of time domain resources of a sub-bandwidth block by which data is successfully transmitted; or
time domain resources reconfigured for the sub-bandwidth block by which data is successfully transmitted.

7. The electronic device according to claim 1, wherein
the determining comprises: allowing to use the bandwidth block to perform uplink data transmission, in a case where the channel idle detection indicates that at least one of the plurality of sub-bandwidth blocks is idle; and
the processing circuitry is further configured to: embed, in data that is successfully transmitted, information for indicating data that is not successfully transmitted.

8. The electronic device according to claim 7, wherein the information for indicating the data that is not successfully transmitted comprises:
an index of a code block group that is not successfully transmitted; or
an index of a code block group that is successfully transmitted, or
wherein the processing circuitry is further configured to:
perform control to use resources selected from pre-configured unscheduled resources to transmit the data that is not successfully transmitted.

## Patentansprüche

1. Elektronisches Gerät (300) für drahtlose Kommunikation, das eine Verarbeitungsschaltung (310) umfasst, die für Folgendes konfiguriert ist:
Durchführen einer Steuerung, um in Bezug auf einen oder mehrere Bandbreitenblöcke eines zugewiesenen unlizenzierten Frequenzbandes eine Kanal-Frei-Erkennung mit einer vorgegebenen Bandbreite durchzuführen; und
Bestimmen, auf der Grundlage eines Ergebnisses der Kanal-Frei-Erkennung, ob der Bandbreitenblock für die Datenübertragung verwendet werden soll oder nicht;
wobei das Durchführen der Kanal-Frei-Erkennung Folgendes umfasst:
Durchführen der Kanal-Frei-Erkennung in Bezug auf eine Vielzahl von Sub-Bandbreitenblöcken des Bandbreitenblocks, die jeweils die vorbestimmte Bandbreite haben;
wobei die Verarbeitungsschaltung ferner für Folgendes konfiguriert ist:
Erfassen von Informationen, die sich auf die Prioritätsstufen der Vielzahl von Sub-Bandbreitenblöcken beziehen,
wobei die Prioritätsstufen auf der Grundlage von Freizustandswahrscheinlichkeiten entsprechender Sub-Bandbreitenblöcke bestimmt werden und Sub-Bandbreitenblöcke, deren Freizustandswahrscheinlichkeiten höher sind, höhere Prioritätsstufen aufweisen; und
wobei das Durchführen der Kanal-Frei-Erkennung Folgendes umfasst:
Durchführen einer Kanal-Frei-Erkennung eines zweiten Typs in Bezug auf einen oder mehrere Sub-Bandbreitenblöcke mit höheren Prioritätsstufen und Durchführen einer Kanal-Frei-Erkennung eines ersten Typs in Bezug auf die übrigen Sub-Bandbreitenblöcke.

2. Elektronisches Gerät nach Anspruch 1, wobei das Bestimmen Folgendes umfasst:
Erlauben der Nutzung des Bandbreitenblocks in einem Fall, in dem die Kanal-Frei-Erkennung anzeigt, dass mindestens einer der Vielzahl von Sub-Bandbreitenblöcken frei ist;
Nichtzulassen der Nutzung des Bandbreitenblocks in einem Fall, in dem die Kanal-Frei-Erkennung anzeigt, dass mindestens einer der Vielzahl von Sub-Bandbreitenblöcken nicht frei ist;
Erlauben der Nutzung des Bandbreitenblocks in einem Fall, in dem die Kanal-Frei-Erkennung anzeigt, dass ein Verhältnis von freien Sub-Bandbreitenblöcken in der Vielzahl von Sub-Bandbreitenblöcken ein vorbestimmtes Verhältnis überschreitet; oder
Nichtzulassen der Nutzung des Bandbreitenblocks in einem Fall, in dem die Kanal-Frei-Erkennung anzeigt, dass ein Verhältnis von nicht freien Sub-Bandbreitenblöcken in der Vielzahl von Sub-Bandbreitenblöcken ein vorbestimmtes Verhältnis überschreitet, oder
wobei das Durchführen der Kanal-Frei-Erkennung Folgendes umfasst:
gleichzeitiges Durchführen der Kanal-Frei-Erkennung in Bezug auf die Vielzahl von Sub-Bandbreitenblöcken; oder
Durchführen der Kanal-Frei-Erkennung nacheinander in Bezug auf die Vielzahl von Sub-Bandbreitenblöcken.

3. Elektronisches Gerät nach Anspruch 1, wobei die Prioritätsstufen von einer Basisstation auf der Grundlage historischer Informationen über die entsprechenden Sub-Bandbreitenblöcke bestimmt und einem Benutzergerät mitgeteilt werden, oder
wobei das Bestimmen Folgendes umfasst:
Erlauben der Nutzung des Bandbreitenblocks in einem Fall, in dem die Kanal-Frei-Erkennung anzeigt, dass ein oder mehrere Sub-Bandbreitenblöcke mit höheren Prioritätsstufen unter der Vielzahl von Sub-Bandbreitenblöcken frei sind; oder
Nichtzulassen der Nutzung des Bandbreitenblocks in einem Fall, in dem die Kanal-Frei-Erkennung anzeigt, dass ein oder mehrere Sub-Bandbreitenblöcke mit höheren Prioritätsstufen unter der Vielzahl von Sub-Bandbreitenblöcken nicht frei sind.

4. Elektronisches Gerät nach Anspruch 1, wobei das Bestimmen Folgendes umfasst:
Erlauben der Nutzung des Bandbreitenblocks zur Durchführung der Downlink-Datenübertragung in einem Fall, in dem die Kanal-Frei-Erkennung anzeigt, dass mindestens einer der Vielzahl von Sub-Bandbreitenblöcken frei ist; und
wobei die Verarbeitungsschaltung ferner für Folgendes konfiguriert ist:
Einbetten, in die erfolgreich übertragenen Daten, einer ersten Information zur Angabe der nicht erfolgreich übertragenen Daten und eine zweite Information zur erneuten Übertragung der nicht erfolgreich übertragenen Daten.

5. Elektronisches Gerät nach Anspruch 4, wobei die erste Information eines der folgenden Elemente umfasst:
einen Index eines Sub-Bandbreitenblocks, durch den Daten nicht erfolgreich übertragen werden;
einen Index einer Codeblockgruppe, die nicht erfolgreich übertragen wurde; und
einen Index einer Codeblockgruppe, die erfolgreich übertragen wurde.

6. Elektronisches Gerät nach Anspruch 4, wobei die zweite Information Folgendes umfasst:
die für die erneute Übermittlung der Daten erforderliche Ressourcenkonfiguration; oder
Zeit-Frequenz-Ressourcen, die eine Position angeben, an der sich neue Downlink-Steuerinformationen befinden, und
wobei die für die erneute Übertragung der Daten erforderliche Ressourcenkonfiguration Folgendes umfasst:
eine Erweiterung der Zeitbereichsressourcen eines Sub-Bandbreitenblocks, durch die Daten erfolgreich übertragen werden; oder
Zeitbereichsressourcen, die für den Sub-Bandbreitenblock neu konfiguriert werden, durch den die Daten erfolgreich übertragen werden.

7. Elektronisches Gerät nach Anspruch 1, wobei das Bestimmen Folgendes umfasst: Erlauben der Nutzung des Bandbreitenblocks zur Durchführung der Uplink-Datenübertragung in einem Fall, in dem die Kanal-Frei-Erkennung anzeigt, dass mindestens einer der Vielzahl von Sub-Bandbreitenblöcken frei ist; und
wobei die Verarbeitungsschaltung ferner für Folgendes konfiguriert ist:
Einbetten, in erfolgreich übertragene Daten, von Informationen, die auf nicht erfolgreich übertragene Daten hinweisen.

8. Elektronisches Gerät nach Anspruch 7, wobei die Informationen zur Anzeige der nicht erfolgreich übertragenen Daten Folgendes umfassen:
einen Index einer Codeblockgruppe, die nicht erfolgreich übertragen wurde, oder
einen Index einer Codeblockgruppe, die erfolgreich übertragen wurde, oder
wobei die Verarbeitungsschaltung ferner für Folgendes konfiguriert ist:
Durchführen einer Steuerung nur Nutzung von Ressourcen, die aus vorkonfigurierten ungeplanten Ressourcen ausgewählt wurden, um
die Daten, die nicht erfolgreich übertragen wurden, zu übertragen.

## Revendications

1. Dispositif électronique (300) destiné à la communication sans fil, comprenant un circuit de traitement (310) configuré pour :
effectuer un contrôle pour procéder, concernant un ou plusieurs blocs de bande passante d'une bande de fréquences sans licence attribuée, à une détection d'inactivité de canal avec une bande passante prédéterminée ; et
déterminer, sur la base d'un résultat de la détection d'inactivité de canal, s'il faut ou non utiliser le bloc de bande passante pour effectuer une transmission de données ;
procéder à une détection d'inactivité de canal comprenant les étapes suivantes :
procéder à une détection d'inactivité de canal concernant une pluralité de blocs de sous-bande passante du bloc de bande passante qui ont la bande passante prédéterminée, respectivement ;
où le circuit de traitement est en outre configuré pour :
acquérir des informations relatives aux niveaux de priorité de la pluralité de blocs de sous-bande passante, les niveaux de priorité étant déterminés sur la base des probabilités d'inactivité des blocs de sous-largeur correspondants, et les blocs de sous-bande passante dont les probabilités d'inactivité sont plus élevées ayant des niveaux de priorité plus élevés ; et
procéder à une détection d'inactivité de canal comprenant les étapes suivantes :
procéder à une détection d'inactivité de canal d'un deuxième type concernant un ou plusieurs blocs de sous-bande passante ayant des niveaux de priorité plus élevés, et procéder à une détection d'inactivité de canal d'un premier type concernant les blocs de sous-bande passante restants.

2. Dispositif électronique selon la revendication 1, dans lequel la détermination comprend les étapes suivantes :
autoriser d'utiliser le bloc de bande passante dans le cas où la détection d'inactivité de canal indique qu'au moins un de la pluralité de blocs de sous-bande passante est inactif ;
ne pas autoriser d'utiliser le bloc de bande passante dans le cas où la détection d'inactivité de canal indique qu'au moins un de la pluralité de blocs de sous-bande passante n'est pas inactif ;
autoriser d'utiliser le bloc de bande passante dans le cas où la détection d'inactivité de canal indique qu'un ratio de blocs de sous-bande passante inactifs dans la pluralité de blocs de sous-bande passante dépasse un ratio prédéterminé ; ou
ne pas autoriser d'utiliser le bloc de bande passante dans le cas où la détection d'inactivité de canal indique qu'un ratio de blocs de sous-bande passante non inactifs dans la pluralité de blocs de sous-bande passante dépasse un ratio prédéterminé, ou
procéder à la détection d'inactivité de canal comprenant les étapes suivantes :
procéder à une détection de canal inactif simultanément par rapport à la pluralité de blocs de sous-bande passante ; ou
procéder à une détection d'inactivité de canal successivement par rapport à la pluralité de blocs de sous-bande passante.

3. Dispositif électronique selon la revendication 1, dans lequel les niveaux de priorité sont déterminés par une station de base sur la base d'informations historiques des blocs de sous-bande passante correspondants et sont communiqués à un équipement utilisateur, ou
la détermination comprenant les étapes suivantes :
autoriser d'utiliser le bloc de bande passante dans le cas où la détection d'inactivité de canal indique qu'un ou plusieurs blocs de sous-bande passante ayant des niveaux de priorité plus élevés parmi la pluralité de blocs de sous-bande passante sont inactifs ; ou
ne pas autoriser d'utiliser le bloc de bande passante dans le cas où la détection d'inactivité de canal indique qu'un ou plusieurs blocs de sous-bande passante ayant des niveaux de priorité plus élevés parmi la pluralité de blocs de sous-bande passante ne sont pas inactifs.

4. Dispositif électronique selon la revendication 1, dans lequel :
la détermination comprend d'autoriser d'utiliser le bloc de bande passante pour effectuer une transmission de données sur la liaison descendante, dans le cas où la détection d'inactivité de canal indique qu'au moins un de la pluralité de blocs de sous-bande passante est inactif ; et
le circuit de traitement est en outre configuré pour intégrer, dans les données transmises avec succès, des premières informations indiquant des données qui n'ont pas été transmises avec succès et des secondes informations relatives à la retransmission des données qui n'ont pas été transmises avec succès.

5. Dispositif électronique selon la revendication 4, dans lequel les premières informations comprennent l'un des éléments suivants :
un index d'un bloc de sous-bande passante par lequel les données ne sont pas transmises avec succès ;
un index d'un groupe de blocs de code qui n'est pas transmis avec succès ; et
un index d'un groupe de blocs de code dont la transmission est réussie.

6. Dispositif électronique selon la revendication 4, dans lequel les secondes informations comprennent :
une configuration de ressources requise pour la retransmission des données ; ou
des ressources temps-fréquence indiquant une position où se trouvent les nouvelles informations de contrôle de liaison descendante, et
la configuration de ressources requise pour la retransmission des données comprenant :
une extension des ressources du domaine temporel d'un bloc de sous-bande passante par lequel les données ont été transmises avec succès ; ou
des ressources du domaine temporel reconfigurées pour le bloc de sous-bande passante par lequel les données ont été transmises avec succès.

7. Dispositif électronique selon la revendication 1, dans lequel :
la détermination comprend d'autoriser d'utiliser le bloc de bande passante pour effectuer une transmission de données sur la liaison montante, dans le cas où la détection d'inactivité de canal indique qu'au moins un de la pluralité de blocs de sous-bande passante est inactif ; et
le circuit de traitement est en outre configuré pour intégrer, dans les données qui sont transmises avec succès, des informations permettant d'indiquer les données qui ne sont pas transmises avec succès.

8. Dispositif électronique selon la revendication 7, dans lequel les informations pour indiquer les données qui ne sont pas transmises avec succès comprennent :
un index d'un groupe de blocs de code qui n'est pas transmis avec succès ; ou
un index d'un groupe de blocs de code dont la transmission est réussie, ou
le circuit de traitement étant en outre configuré pour :
procéder à un contrôle pour utiliser des ressources sélectionnées parmi des ressources non programmées préconfigurées pour transmettre les données qui n'ont pas été transmises avec succès.
